# EUROPEAN PATENT APPLICATION

(11) **EP 4 549 027 A1**
(43) Date of publication of application: **07.05.2025**
(21) Application number: 22808582.5
(22) Date of filing: 13.10.2022
(51) Int. Cl.: B05B 1/18, B01D 35/02, B01D 35/30, B05B 15/40

(54) **SHOWER HEAD WITH BENT FILTER**

(30) Priority: 29.06.2022 KR 20220079961
(71) Applicant: Blueindus Co., Ltd., Yangsan-si, Gyeongsangnam-do 50591 (KR)
(72) Inventor: JUNG, Chun Sik, Busan 48594 (KR)
(74) Representative: HGF
(86) International application number: PCT/KR2022/015442
(87) International publication number: WO 2024/005267

(57) **Abstract**

Proposed is a showerhead device including a pleated filter. The showerhead device includes a head, a filter module, and a housing frame. The head includes a housing allowing water to enter and having an open portion and a cap coupled to the housing through the open portion of the housing and having a plurality of holes through which water is discharged. The filter module is provided inside the head. The filter module includes a filter continuously pleated inward and outward along a circumferential direction and able to filter water when water flows through the filter in an outside-to-inside direction, a core provided on an inner circumferential surface of the filter and having a plurality of holes in circumferential portions thereof, and an outer cage provided on an outer circumferential surface of the filter and having a plurality of holes in circumferential portions thereof. The housing frame is mounted inside the head while accommodating the filter module therein, and includes an inner support inserted into the core of the filter module, an outer frame surrounding an outer circumferential surface of the outer cage of the filter module and having a plurality of holes formed in a circumferential surface of the outer frame, a first side plate closing one side of the outer frame and one side of

## Description

### Technical Field

The present disclosure relates to a showerhead device including a pleated filter and, more particularly, to a showerhead device including a pleated filter, wherein the filter pleated inward and outward is provided as a module having the shape of a package or a cartridge so as to be easily replaceable.

### Background Art

Typically, a separate filter has been connected to a handle of a showerhead device in order to improve the efficiency of the filter in use. However, this method increases the volume of the showerhead device. Thus, methods enabling a filter to be inserted into the showerhead device have been developed.

In particular, a filter is repeatedly pleated along a circumference thereof such that overlapping portions thereof defined by the pleated shape thereof may maximize the efficiency of the filter.

Such a filter is fabricated from a texture having a predetermined area size. The filter is pleated into a cylindrical shape, and serves to filter water while water is passing through the filter in a direction from the outside to the inside. In order to maintain the pleated shape of the filter, support members are required to be provided inside and outside the filter.

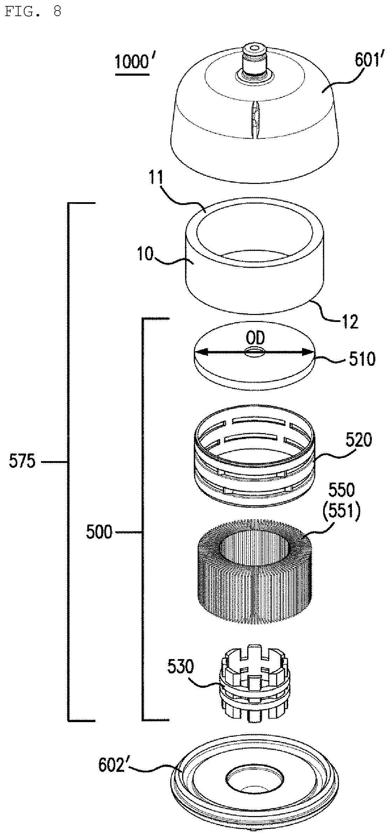

In Korean Patent Application Publication No. 10-2021-0158352, entitled "*FILTER ARRAY AND FILTER DEVICE INCLUDING PRE-FILTER ELEMENTS*"*.* In this document, drawings and description of a support structure for maintaining the shape of a pleated filter are disclosed, as is illustrated in FIG. 8.

However, in the related-art document, FIG. 8 is an exploded perspective view illustrating a related-art showerhead device. Here, a filter module is illustrated, in which the shape of a filter 550 is maintained by a core 530 provided inside the filter and an outer cage 520 provided outside the filter. Since both sides of the filter module are open, the filter may be sometimes dislodged from the filter module during shipping or by water pressure in use.

In addition, the related-art filter module is required to be fixed at an accurate position within a head of the showerhead device and facilitate entrance and discharge of water while filtering the water.

In addition, water enters the filter in a direction from the outside to the inside and is discharged from the filter through an inner diameter portion of the filter. The radius of a body of water discharged from the filter is smaller than the inner diameter of the filter. Thus, it is difficult to use the related-art array or device as a showerhead device, except for being used as a tap of a sink or a washstand.

### Disclosure

### Technical Problem

Accordingly, the present disclosure has been made keeping in mind the above problems occurring in the prior art, and an objective of the present disclosure is to provide a showerhead device including a pleated filter, wherein the pleated filter may maintain the shape thereof and be easily replaceable.

Also provided is a showerhead device including a pleated filter, wherein a filter module may be provided as a housing to provide paths for entrance and discharge of water, thereby minimizing a loss in water pressure.

### Technical Solution

In order to accomplish the above objective, the present disclosure provides a showerhead device including a pleated filter. The showerhead device may include: a head including a housing configured to allow water to enter and having an open portion and a cap coupled to the housing through the open portion of the housing and having a plurality of holes through which water is discharged; a filter module provided inside the head, and including a filter continuously pleated inward and outward along a circumferential direction and able to filter water when water flows through the filter in an outside-to-inside direction, a core provided on an inner circumferential surface of the filter and having a plurality of holes in circumferential portions thereof, and an outer cage provided on an outer circumferential surface of the filter and having a plurality of holes in circumferential portions thereof; and a housing frame mounted inside the head while accommodating the filter module therein, and including an inner support inserted into the core of the filter module, an outer frame surrounding an outer circumferential surface of the outer cage of the filter module and having a plurality of holes formed in a circumferential surface of the outer frame, a first side plate closing one side of the outer frame and one side of the inner support, and a second side plate coupled to the other sides of the outer frame and the inner support and having discharge holes. The filter module may be accommodated within the housing frame so as to be inserted into or removed from the head.

The inner support of the housing frame may have teeth protruding from outer circumferential portions, such that, when the filter module is coupled to the housing frame, the teeth maintain inner gaps between the inner support and the core of the filter module and maintain outer gaps between the outer frame and the outer cage of the filter module to be constant.

The second side plate may have the discharge holes in portions corresponding to the inner gaps defined by the protruding teeth, such that water that has passed through the filter is discharged through the discharge holes.

The first side plate and the second side plate of the housing frame may be thermally fused to a side surface of the filter module such that the filter module is fixed inside the housing frame.

The cap may include: a threaded portion provided on an outermost portion of the cap to be fastened to the head of the showerhead device; a close contact portion provided inside the threaded portion to be in close contact with a peripheral portion of the second side plate of the housing frame; and a stepped portion stepped downward from the close contact portion to define an inner space together with the second side plate and having holes in a bottom thereof, such that water that has passed through the discharge holes of the second side plate radially spreads to pass through the holes of the stepped portion of the cap.

### Advantageous Effects

According to the technical solution, the following effects may be obtained.

The pleated filter may be inserted into the head of the showerhead device to improve filtration efficiency in a limited space.

The shape of the pleated filter may be maintained by the filter module. In addition, since the pleated filter is mounted inside the housing frame, the filter in the showerhead device may be replaced as a module.

The filter module coupled to the interior of the housing frame defines the uniform gap on the outer circumferential surface. The uniform gap may facilitate entrance and discharge of water from the outer circumferential surface to the inner circumferential surface, thereby advantageously reducing a loss in water pressure.

### Description of Drawings

FIG. 1 is a perspective view illustrating a showerhead device including a pleated filter according to an embodiment of the present disclosure;
FIG. 2 is a perspective view illustrating the interior of the showerhead device of FIG. 1, from which the cap is removed;
FIG. 3 is a perspective view illustrating the showerhead device of FIG. 1;
FIG. 4 is an example view illustrating the housing frame and the filter bag to be fitted together;
FIG. 5 is a detailed view illustrating the pleated filter;
FIG. 6 is a top view illustrating the internal configuration of the showerhead device including a pleated filter according to the embodiment of the present disclosure;
FIG. 7 is a cross-sectional view illustrating the configuration of the showerhead device including a pleated filter according to the embodiment of the present disclosure; and
FIG. 8 is an exploded perspective view illustrating a related-art showerhead device.

### Best Mode

Hereinafter, embodiments of the present disclosure will be described in detail. The following description and the accompanying drawings are intended to aid in general understanding of the present disclosure, but the scope of the present disclosure is not limited thereto. In addition, when it is determined that a configuration or a function of the related art would obscure the gist of the present disclosure, a detailed description thereof will be omitted.

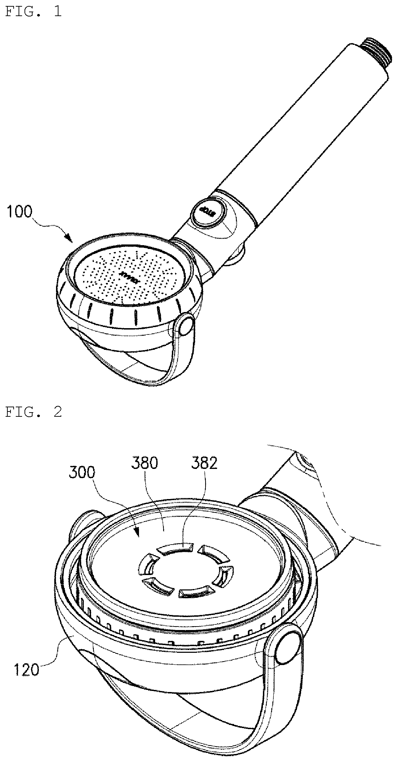

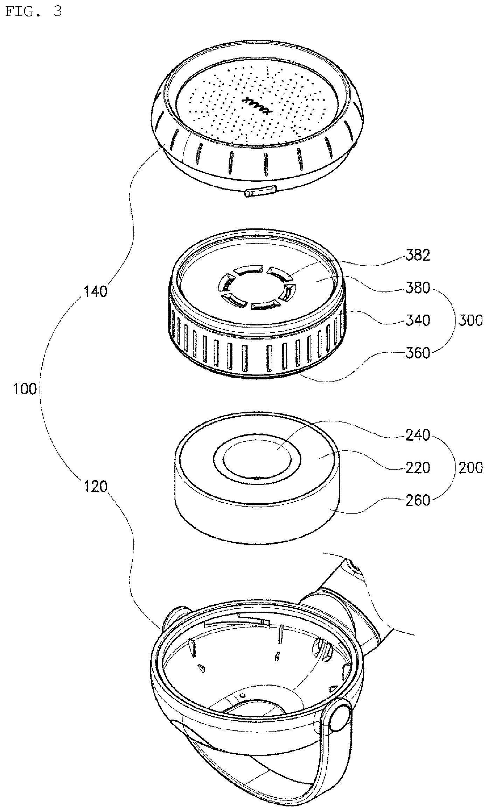

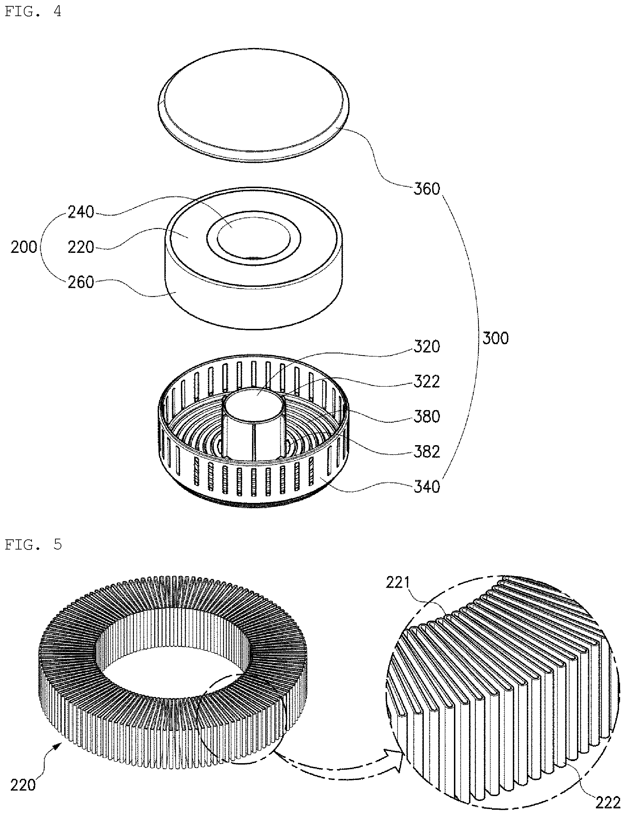

FIG. 1 is a perspective view illustrating a showerhead device including a pleated filter according to an embodiment of the present disclosure, FIG. 2 is a perspective view illustrating the interior of the showerhead device of FIG. 1, from which the cap is removed, FIG. 3 is a perspective view illustrating the showerhead device of FIG. 1, and FIG. 4 is an example view illustrating the housing frame and the filter bag to be fitted together.

Referring to FIGS. 1 to 4, the showerhead device including a pleated filter according to the present disclosure generally includes a head 100, a filter module 200, and a housing frame 300.

The head 100 is a part corresponding to the outer shape of the showerhead device.

The head 100 includes a housing 120 and a cap 140. The housing 120 configured to allow water to enter the inside thereof and having an open portion. The cap 140 is coupled to the housing 120 through the open portion of the housing 120 by rotation and having a plurality of holes through which water is discharged.

The filter module 200 is a portion that filters power.

The filter module 200 corresponds to a package or a cartridge including a filter 220, a core 240, and an outer cage 260, which are fitted together.

First, in the present disclosure, the filter 220 is continuously pleated inward and outward along the circumference, thereby forming an annular shape. The filter 220 may filter water while water flows from the outside to the inside. The continuously pleated shape may advantageously increase the capacity of the filter in a limited space. FIG. 5 is a detailed view illustrating the pleated filter. As illustrated in FIG. 5, the filter is continuously pleated in the circumferential direction. Water is filtered while passing through the filter from outermost portions 222 to innermost portions 221.

In addition, the core 240 is a component supporting the inner portion of the filter 220. The outer cage 260 is a component supporting the outer portion of the filter 220. Due to the core 240 and the outer cage 260, the repeatedly-pleated filter 220 may be maintained in the circular shape.

Here, the core 240 and the outer cage 260 may be in the shape of cylinders to support the inner and outer portions of the filter. Each of the core 240 and the outer cage 260 is provided with a plurality of holes in the circumferential portions thereof. The holes form paths through which water may enter the filter from the outside to the inside and be discharged inward from the filter after being filtered while passing through the filter.

The housing frame 300 is a component accommodating the filter module 200 therein and allowing the filter module 200 to be mounted inside the head 100.

The housing frame 300 includes an inner support 320, an outer frame 340, a first side plate 360, and a second side plate 380 so as to accommodate all surfaces of the filter module 200.

The inner support 320 has a cylindrical shape so as to be inserted into the core 240 of the filter module 200.

The outer frame 340 has a cylindrical shape surrounding the outer circumferential surface of the outer cage 260 of the filter module 200, with a plurality of holes being formed in the circumferential surface of the outer frame.

The first side plate 360 closes one side of the outer frame 340 and one side of the inner support 320.

The second side plate 380 is coupled to the other sides of the outer frame 340 and the inner support 32, and has discharge holes 382. Here, the second side plate 380 is positioned in the direction of the cap 140, such that water is discharged toward the cap 140 through the discharge holes 382.

As described above, the housing frame 300 allows the filter module 200 to be inserted into or removed from the head 100 while being accommodated therein, thereby facilitating replacement of the filter.

In addition, the inner support 320 of the housing frame 300 has teeth 322 protruding from the outer circumferential portions. When the filter module 200 is coupled to the housing frame 300, the teeth 322 maintain inner gaps between the inner support 320 and the core 240 of the filter module 200. In addition, outer gaps between the outer frame 340 and the outer cage 260 of the filter module 200 are maintained to be constant. Thus, water paths and fluid pressure may be maintained constant or uniform by the gaps.

In addition, the second side plate 380 has the discharge holes 382 in portions corresponding to the inner gaps defined by the protruding teeth 322, such that water that has passed through the filter is discharged through the discharge holes 382.

Furthermore, the first side plate 360 and the second side plate 380 of the housing frame 300 may be thermally fused to the side surface of the filter module 200 such that the filter module 200 is fixed inside the housing frame, thereby preventing the filter module 200 from rotating inside the housing frame 300.

In addition, the cap 140 includes a threaded portion, a close contact portion, and a stepped portion. The threaded portion is formed on the outermost portion of the cap 140 to be fastened to the head of the showerhead device. The close contact portion is formed inside the threaded portion to be in close contact with the peripheral portion of the second side plate 380 of the housing frame 300. The stepped portion is stepped downward from the close contact portion to define an inner space together with the second side plate. The stepped portion has holes in the bottom thereof, such that water that has passed through the discharge holes of the second side plate radially spreads to pass through the holes of the stepped portion of the cap.

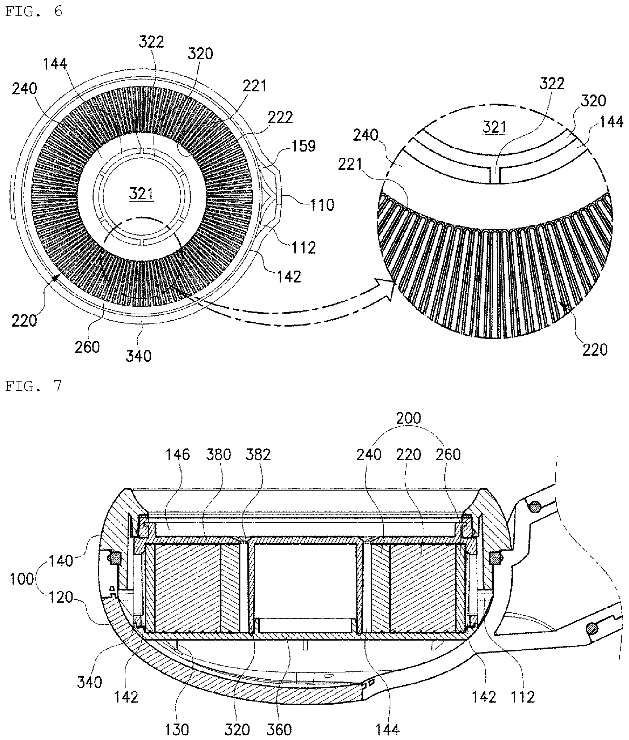

FIG. 6 is a top view illustrating the internal configuration of the showerhead device including a pleated filter according to the embodiment of the present disclosure, and FIG. 7 is a cross-sectional view illustrating the configuration of the showerhead device including a pleated filter according to the embodiment of the present disclosure.

Referring to FIG. 6, the filter 220 is disposed in the space between the core 240 and the outer cage 260 to extend in the circumferential direction while having a repeatedly pleated structure. Since the filter 220 has a wide filtering area in a limited space, the filter 220 can filter a large amount of water at once and has a small loss in water pressure.

Hereinafter, flow of water in the showerhead device will be described.

First, water that has entered the head of the showerhead device from the handle of the showerhead device flows to the outer frame 340 of the housing frame. Then, the water enters the filter module through a gap 142 between the outer frame 340 and the outer cage 260. In addition, the water passes through the filter 220 and is discharged to gaps 144 through the core 240.

Here, the gaps 144 are formed due to the protruding teeth 322 of the inner support 320 of the housing frame. In addition, the gap 142 extending along the outer circumference also has a uniform width. This configuration may facilitate entrance and discharge of water, thereby reducing a loss in water pressure.

Referring to FIG. 7, water that has entered through a connecting path 112 between the housing 120 of the head 100 and the handle enters through the gap 142 between the outer frame 340 and the outer cage 260 so as to be filtered through the filter 220. Then, the water is spread through a gap 146 so as to be discharged through the entire surface of the cap 140 of the head 100. Here, the gap may have a width of 1 mm to 3 mm to obtain a flow path allowing water to enter so as to maintain a constant water pressure.

As set forth above, the showerhead device including a pleated filter according to the present disclosure has been described as an example of the spirit and scope of the present disclosure. A variety of modifications are possible to those skilled in the art without departing from the spirit and scope of the present disclosure.

## Claims

1. A showerhead device including a pleated filter, the showerhead device comprising:
a head comprising a housing configured to allow water to enter and having an open portion and a cap coupled to the housing through the open portion of the housing and having a plurality of holes through which water is discharged;
a filter module provided inside the head, and comprising a filter continuously pleated inward and outward along a circumferential direction and able to filter water when water flows through the filter in an outside-to-inside direction, a core provided on an inner circumferential surface of the filter and having a plurality of holes in circumferential portions thereof, and an outer cage provided on an outer circumferential surface of the filter and having a plurality of holes in circumferential portions thereof; and
a housing frame mounted inside the head while accommodating the filter module therein, and comprising an inner support inserted into the core of the filter module, an outer frame surrounding an outer circumferential surface of the outer cage of the filter module and having a plurality of holes formed in a circumferential surface of the outer frame, a first side plate closing one side of the outer frame and one side of the inner support, and a second side plate coupled to the other sides of the outer frame and the inner support and having discharge holes,
wherein the filter module is accommodated within the housing frame so as to be inserted into or removed from the head, and
the inner support of the housing frame has teeth protruding from outer circumferential portions, such that, when the filter module is coupled to the housing frame, the teeth maintain inner gaps between the inner support and the core of the filter module and maintain outer gaps between the outer frame and the outer cage of the filter module to be constant.

2. The showerhead device of claim 1, wherein the second side plate has the discharge holes in portions corresponding to the inner gaps defined by the protruding teeth, such that water that has passed through the filter is discharged through the discharge holes.

3. The showerhead device of claim 1, wherein the first side plate and the second side plate of the housing frame are thermally fused to a side surface of the filter module such that the filter module is fixed inside the housing frame.

4. The showerhead device of claim 1, wherein the cap comprises:
a threaded portion provided on an outermost portion of the cap to be fastened to the head of the showerhead device;
a close contact portion provided inside the threaded portion to be in close contact with a peripheral portion of the second side plate of the housing frame; and
a stepped portion stepped downward from the close contact portion to define an inner space together with the second side plate and having holes in a bottom thereof, such that water that has passed through the discharge holes of the second side plate radially spreads to pass through the holes of the stepped portion of the cap. the inner support, and a second side plate coupled to the other sides of the outer frame and the inner support and having discharge holes. The filter module is accommodated within the housing frame so as to be inserted into or removed from the head.
